## Europäisches Patentamt

## European Patent Office

## Office européen des brevets

(19)

(11) Veröffentlichungsnummer: **0 235 315**
**B1**

(12)

# EUROPÄISCHE PATENTSCHRIFT

(45) Veröffentlichungstag der Patentschrift:
07.02.90

(21) Anmeldenummer: **86102343.0**

(22) Anmeldetag: **24.02.86**

(51) Int. Cl.⁴: **C02F 1/28**, C02F 1/50,
B01D 35/04

(54) **Gerät zum Filtern von Wasser.**

(43) Veröffentlichungstag der Anmeldung:
**09.09.87 Patentblatt 87/37**

(45) Bekanntmachung des Hinweises auf die Patenterteilung:
**07.02.90 Patentblatt 90/6**

(84) Benannte Vertragsstaaten:
**CH DE GB IT LI NL**

(56) Entgegenhaltungen:
**EP-A- 0 023 444**
**EP-A- 0 166 022**
**DE-A- 2 609 846**
**FR-A- 2 091 499**
**FR-A- 2 392 940**
**GB-A- 131 488**
**US-A- 1 527 057**
**US-A- 2 017 456**
**US-A- 3 561 506**

(73) Patentinhaber: **LEIFHEIT Aktiengesellschaft,**
**Leifheitstrasse, D-5408 Nassau/Lahn(DE)**

(72) Erfinder: **Schülein, Rolf Günter, Gartenstrasse 13,**
**D-5409 Singhofen(DE)**
Erfinder: **Friedrich, Rainer, Obernhofer Strasse 27,**
**D-5408 Nassau/Lahn(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Gerät zum Filtern von Wasser für den Hausgebrauch gemäß dem Oberbegriff des Anspruchs 1.

Ein derartiges Gerät ist durch die DE-A 3 235 328 bekannt.

Neben diesem Handgerät ist durch die DE-A 3 248 126 ein Standgerät bekannt. Beide Geräte haben den Nachteil, daß immer eine relativ große Menge gefiltertes Restwasser im Gerät verbleibt. Nach längeren Stillstandsperioden muß man inkaufnehmen, einen Teil nicht ganz frisches Wasser zu verwenden oder das im Gerät vorhandene gefilterte aber abgestandene Wasser wegschütten.

Weiter ist nach der US-A 3 561 506 ein Gerät zum Filtern von Wasser für den Hausgebrauch bekannt, bei dem zwischen einem Trichter und dem Auffangbehälter ein Filter mit Absperreinrichtung vorgesehen ist. Derartige Geräte mit Absperreinrichtung haben den Vorteil, daß nicht das gesamte Gerät zur Wasserquelle getragen werden muß. Es genügt, Wasser mit dem Auffangbehälter in den Trichter zu schütten; der Filtervorgang beginnt erst nach öffnen des Ventils. Nachteilig an dieser Ausführung ist, daß die Absperreinrichtung durch Einschieben des Auffangbehälters zwangsweise geöffnet wird.

Eine Unterbrechung des Filtervorgangs ist nur durch Herausziehen des Auffangbehälters möglich. Desweiteren ist die Absperreinrichtung recht aufwendig. Die Absperreinrichtung gibt auch keine Möglichkeit einer Regulierung der Durchflußgeschwindigkeit.

Aufgabe der Erfindung ist es, ein Gerät zu schaffen, bei dem immer frisch gefiltertes Wasser, auch in kleinen Mengen zur Verfügung steht, und das einfach zu bedienen ist. Es ist in diesem Zusammenhang auch sehr wichtig, daß die Filterpatrone immer unter Wasser steht, um durch die Wirkung der gesilberten Kohle keimfrei zu bleiben. Insbesondere bei dem Gerät nach der DE-A 3 235 328 besteht die Gefahr, daß bei falscher Bedienung, also wenn sämtliches Wasser aus dem Gerät entfernt wird, die Filterpatrone verkeimt.

Die gestellte Aufgabe wird durch die kennzeichnenden Merkmale des Anspruchs 1 gelöst. Durch die Absperreinrichtung ist es möglich, den Auffangbehälter aus dem Gerät zu entfernen und mit diesem das zu filternde Wasser aus der Wasserleitung zu entnehmen. Es ist nicht erforderlich, das gesamte Gerät unter die Wasserleitung zu halten. Die Handhabung wird damit wesentlich vereinfacht. Dadurch, daß die Filterpatrone immer in der gleichen Lage verbleibt, es handelt sich zweckmäßigerweise um eine sogenannte Siphonpatrone, sind Fehlbedienungen praktisch ausgeschlossen. Die Patrone steht immer senkrecht, es bleibt immer ein Restwasser in der Patrone, so daß die große Gefahr des Verkeimens praktisch ausgeschLossen ist.

Weitere Ausgestaltungen der Erfindung sind den Unteransprüchen zu entnehmen. Durch die besondere Ausbildung der Aufnahme für die Filterpatrone und der Absperreinrichtung, die Aufnahme mit Innengewinde, die Absperreinrichtung mit Außengewinde, können in dieses Gerät sehr leicht unterschiedliche Filterpatronen eingesetzt werden. Es ist lediglich erforderlich, die Abstimmung bezüglich des Gewindes zu treffen. Die Form der Filterpatrone kann in einem weiten Bereich schwanken.

Ein Ausführungsbeispiel der Erfindung ist im folgenden an Hand der Zeichnungen näher erläutert.

Es zeigen:

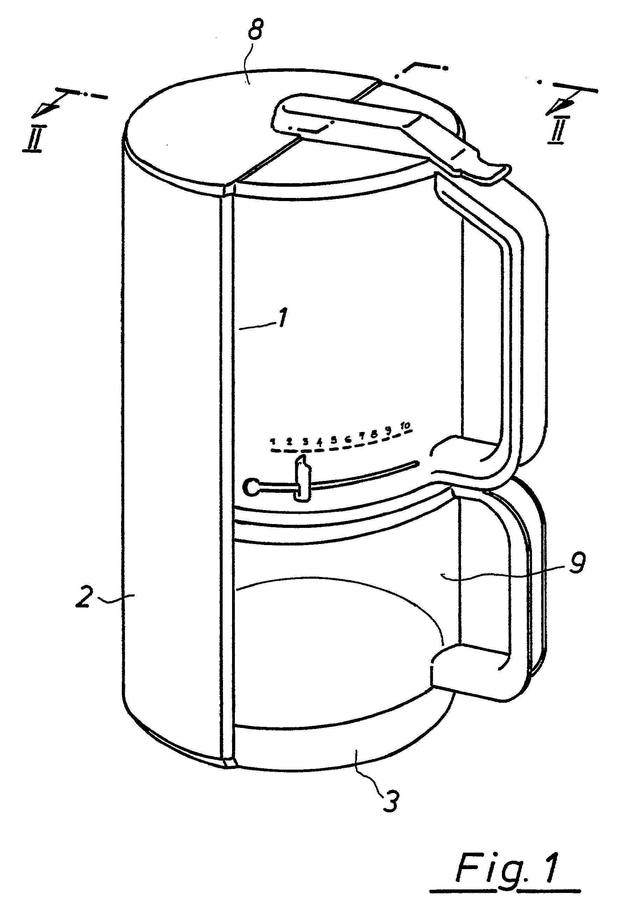

Figur 1 eine perspektivische Ansicht des Gerätes,

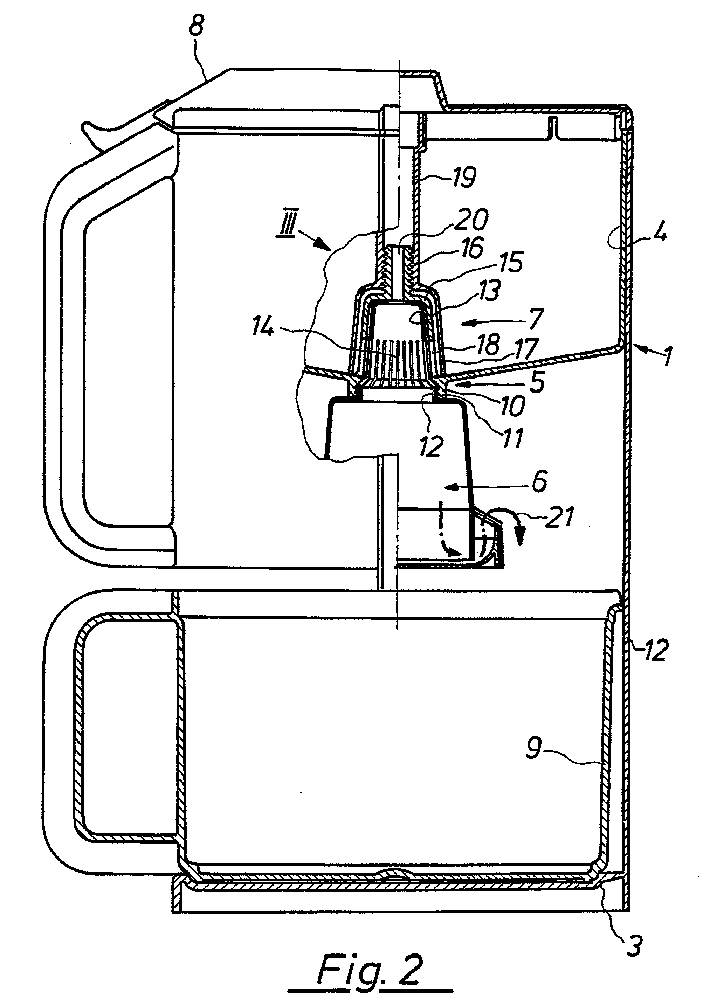

Figur 2 einen Teilschnitt durch das Gerät entsprechend der Linie II - II in Figur 1, wobei die Absperreinrichtung geschlossen ist,

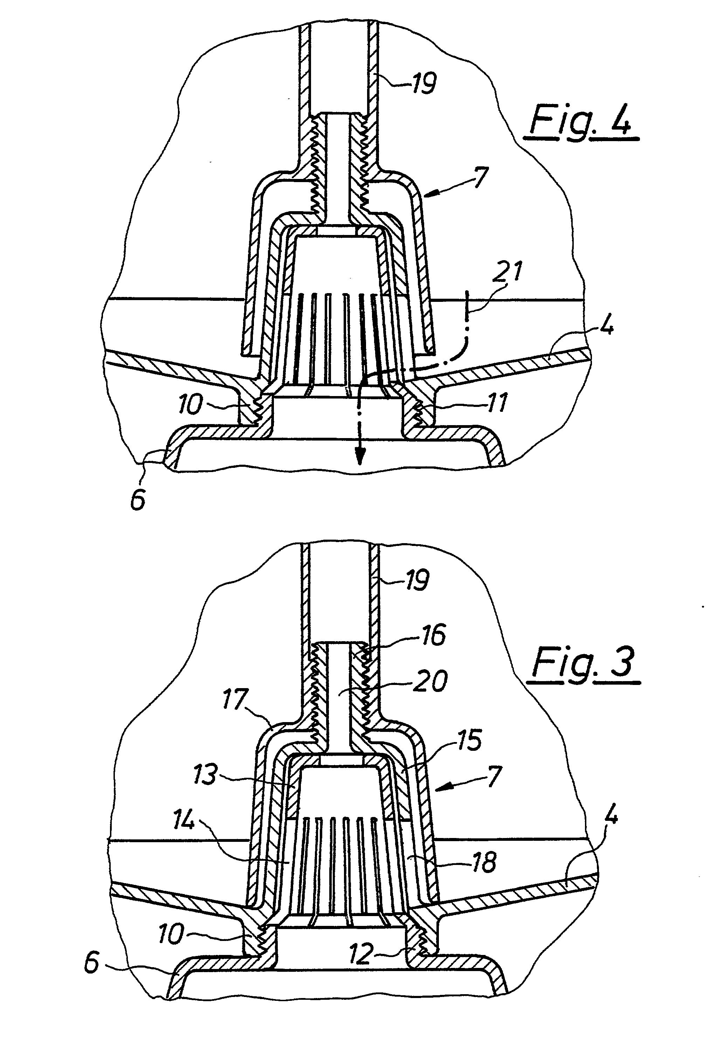

Figur 3 einen Ausschnitt gemäß III in Figur 1 bei geschlossener Absperreinrichtung und

Figur 4 bei geöffneter Absperreinrichtung.

Das Gerät zum Filtern von Wasser besteht im wesentlichen aus einem Trichterteil 1 mit angeformtem Wandteil 2 und einer Bodenplatte 3. In das Trichterteil 1 ist ein Trichter 4 mit einer Aufnahme 5 für eine Filterpatrone 6 eingesetzt. Über der Aufnahme 5 ist eine Absperreinrichtung 7 angeordnet. Das Trichterteil 1 ist durch einen Klappdeckel 8 abgedeckt.

Zum Auffangen des gefilterten Wassers ist ein Auffangbehälter 9 vorgesehen.

Die Filterpatrone 6 ist als sogenannter Siphonfilter ausgeführt. Die Aufnahme 5 besteht aus einer an den Trichter 4 auf der Unterseite angeformten Gewindehülse 10 mit Innengewinde 11. In diese Gewindehülse 10 ist mittels eines Gewindekragens 12 die Filterpatrone eingeschraubt. Der Gewindekragen 12 der Filterpatrone 6 setzt sich in dem Einlaufdom 13 mit Einlaufschlitze 14 fort.

Dieser Einlaufdom 13 wird von der Absperreinrichtung 7 überspannt. Die Absperreinrichtung 7 besteht aus einem Einaufteil 15, das einstückig mit dem Trichter 4 ausgeführt ist, einem Gewindezapfen 16 und dem auf den Gewindezapfen 16 aufzuschraubendem Sperrteil 17. Das Sperrteil 17 übergreift glockenförmig das Einlaufteil 15. In dem Einlaufteil 15 sind bodenbündig mit dem Trichter 4 Einlauföffnungen 18 vorgesehen. Das Sperrteil 17 endet in einem Griffteil 19.

Zur Entlüftung der Filterpatrone 6 ist das Einlaufteil 15 im Gewindezapfen 16 mit einer Bohrung 20 versehen. Zur Weiterführung dieser Entlüftung ist das Griffteil 19 hohl ausgeführt. Mit 21 ist die Flußrichtung des Wassers gekennzeichnet.

## Patentansprüche

1. Gerät zum Filtern von Wasser für den Hausgebrauch mit einer Aufnahme (5) für eine Filterpatrone (6) in einem Trichter (4), der über einem Auffangbehälter (9) ortsbeweglich angeordnet ist und einer den Wasserdurchlauf durch die Filterpatrone freigebenden Absperreinrichtung (7), dadurch gekennzeichnet, daß über der Aufnahme (5) die Absperreinrichtung (7), bestehend aus einem glockenförmigen Sperrteil (17) zur überdeckung von oben in der Filterpatrone angeordneten Einlaufschlitzen (14) und einem daran angeformten, den Trichter (4) durchdringenden Griffteil (19), angeordnet ist, wobei das Sperrteil (17) über einen Gewindezapfen (16) in eine Sperr- und eine Durchlaufstellung bringbar ist.

2. Gerät nach Anspruch 1, dadurch gekennzeichnet, daß die Aufnahme aus einer an den Trichter angeformten Gewindehülse (10) besteht.

3. Gerät nach Anspruch 2, dadurch gekennzeichnet, daß auf der Unterseite des Trichters die Gewindehülse (10) mit einem Innengewinde (11) zur Befestigung der Filterpatrone (6) und auf der Innenseite des Trichters das Einlaufteil (15) mit zumindest einer Einlauföffnung (18) und einem Außengewinde zur Führung des Sperrteiles (17) angeordnet sind.

4. Gerät nach einem der Ansprüche 1 bis 3, dadurch gekennzeichnet, daß der Trichter (4) in einem Trichterteil (1) angeordnet ist, das über ein Wandteil (2) mit einer Bodenplatte (3) zum Abstellen des Auffangbehälters (9) einstückig verbunden ist.

5. Gerät nach einem der Ansprüche 1 bis 4, dadurch gekennzeichnet, dan das Griffteil (19) und das Einlaufteil (15) mit einer axialen Bohrung (20) versehen sind.

## Claims

1. Appliance for the filtering of water for domestic use having a receptacle (5) for a filter cartridge (6) in a funnel (4), which is arranged in a moveable manner above a collecting vessel (9), and having a shut-off device (7) releasing the flow of water through the filter cartridge, characterized in that the shut-off device (7), consisting of a bell-shaped closing part (17) to cover inlet slits (14), arranged in the filter cartridge, from above and a handle part (19), moulded onto the said shut-off part (17), passing through the funnel (4), is arranged above the receptacle (5), the closing part (17) being capable of adjustment via a threaded stem (16) into a closing position and a flow position.

2. Appliance according to Claim 1, characterized in that the receptacle consists of a threaded sleeve (10) moulded onto the funnel.

3. Appliance according to Claim 2, characterized in that the threaded sleeve (10), having an internal thread (11), is arranged on the underside of the funnel to retain the filter cartridge (6) and the inlet part (15), having at least one inlet opening (18) and an external thread, is arranged on the inside of the funnel to guide the closing part (17).

4. Appliance according to one of Claims 1 to 3, characterized in that the funnel (4) is arranged in a funnel part (1) which is connected in one piece to a bottom plate (3), via a wall part (2), for setting down the collecting vessel (9).

5. Appliance according to one of Claims 1 to 4, characterized in that the handle part (19) and the inlet part (15) are provided with an axial bore-hole (20).

## Revendications

1. Dispositif pour la filtration des eaux à usage domestique, avec un support (5) pour une cartouche de filtre (6) dans un entonnoir (4), qui est déplaçable au-dessus d'un réceptacle (9), et un dispositif de retenue (7) libérant l'écoulement de l'eau à travers la cartouche de filtre, caractérisé en ce qu'au-dessus du support (5) est disposé le dispositif de retenue (7) se composant d'une pièce de retenue (17) en forme de cloche pour recouvrir des fentes de passage (14) ménagées dans le haut de la cartouche de filtre, et d'une pièce de préhension (19) formée sur celle-ci et traversant l'entonnoir (4), la pièce de retenue (17) pouvant être amenée, grâce à une portée filetée (16), dans une position de retenue et dans une position d'écoulement.

2. Dispositif suivant la revendication 1, caractérisé en ce que le support se compose d'une collerette filetée (10) formés sur l'entonnoir.

3. Dispositif suivant la revendication 2, caractérisé en ce que la collerette filetée (10) est disposée sur la face inférieure de l'entonnoir, avec un filet intérieur (11) pour la fixation de la cartouche de filtre (6), et en ce que la pièce d'entrée (15) avec au moins une ouverture d'entrée (18) et un filet extérieur pour le guidage de la pièce de retenue (17) est disposée sur la face intérieure de l'entonnoir.

4. Dispositif suivant l'une ou l'autre des revendications 1 à 3, caractérisé en ce que l'entonnoir (4) est disposé dans un compartiment à entonnoir (1) qui est relié d'une pièce par une paroi partielle (2) à une plaque de fond (3) sur laquelle on dépose le réceptacle (9).

5. Dispositif suivant l'une ou l'autre des revendications 1 à 4, caractérisé en ce que la pièce de préhension (19) et la pièce d'entrée (15) sont pourvues d'un passage axial (20).

_Fig.1_

_Fig. 2_

_Fig. 4_

_Fig. 3_